(19) Europäisches Patentamt
European Patent Office
Office européen des brevets

(11) **EP 2 991 354 A1**

(12) **EUROPEAN PATENT APPLICATION**

(43) Date of publication:
**02.03.2016 Bulletin 2016/09**

(51) Int Cl.:
**H04N 19/30** $^{(2014.01)}$

(21) Application number: **14306322.0**

(22) Date of filing: **27.08.2014**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Thomson Licensing**
**92130 Issy-les-Moulineaux (FR)**

(72) Inventors:
• **Thoreau, Dominique**
**35576 Cesson-Sévigné (FR)**

• **Boitard, Ronan**
**35576 Cesson-Sévigné (FR)**
• **Le Pendu, Mikael**
**35576 Cesson-Sévigné (FR)**
• **Lasserre, Sébastien**
**35576 Cesson-Sévigné (FR)**

(74) Representative: **Huchet, Anne**
**Technicolor**
**1-5 rue Jeanne d'Arc**
**92130 Issy-Les-Moulineaux (FR)**

(54) **Method and apparatus for improving the prediction of a block of the enhancement layer**

(57)     A method (350) includes: applying (S360) inverse tone mapping operations to a block $(b_b)$ of a first layer $(l_b)$ and to a prediction block $(b_b)$ of the block $(b_b)$ of the first layer $(l_b)$, respectively, computing (S365) a residual prediction error $(r_b^e)$ in a second layer $(l_e)$, and computing (S370) a prediction $(p_e)$ of a block of the second layer $(l_e)$.

<u>350</u>

```
           ( Start )

┌──────────────────────────────────────────┐
│       Motion Estimation/Compensation        │  ── S355
└──────────────────────────────────────────┘

┌──────────────────────────────────────────┐
│        Inverse Tone Mapping Operations       │  ── S360
└──────────────────────────────────────────┘

┌──────────────────────────────────────────┐
│  Compute the residual error $r_b^e$ in the HDR enhancement layer  │  ── S365
└──────────────────────────────────────────┘

┌──────────────────────────────────────────┐
│  Compute the HDR enhancement layer prediction $p_e$  │  ── S370
└──────────────────────────────────────────┘

┌──────────────────────────────────────────┐
│  Compute the HDR enhancement layer residual error $r_e$  │  ── S375
└──────────────────────────────────────────┘

┌──────────────────────────────────────────┐
│   Transform and Quantize the residual error $r_e$   │  ── S380
└──────────────────────────────────────────┘

┌──────────────────────────────────────────┐
│  Code the HDR enhancement layer residual error $r_e$  │  ── S385
└──────────────────────────────────────────┘

           ( End )
```

Fig. 3B

EP 2 991 354 A1

**Description**

TECHNICAL FIELD

The present disclosure generally relates to a method and apparatus for improving prediction of current block of enhancement layer.

BACKGROUND ART

Low-Dynamic-Range frames (LDR frames) are frames whose luminance values are represented with a limited number of bits (most often 8 or 10). This limited representation does not allow correct rendering of small signal variations, in particular in dark and bright luminance ranges. In high-dynamic range frames (HDR frames), the signal representation is extended in order to maintain a high accuracy of the signal over its entire range. In HDR frames, pixel values are usually represented in floating-point format (either 32-bit or 16-bit for each component, namely float or half-float), the most popular format being openEXR half-float format (16-bit per RGB component, i.e. 48 bits per pixel) or in integers with a long representation, typically at least 16 bits.
A typical approach for encoding an HDR frame is to reduce the dynamic range of the frame in order to encode the frame by means of a legacy encoding scheme (initially configured to encode LDR frames).
In a field of image processing, a tone mapping operator (which may be hereinafter referred to as "TMO") is known. In imaging actual objects in a natural environment, the dynamic range of the actual objects are much higher than a dynamic range that imaging devices such as cameras can image or displays can display. In order to display the actual objects on displays in a natural way, the TMO is used for converting a high dynamic range (HDR) image to a low dynamic range (LDR) image while maintaining good visible conditions.
Generally speaking, the TMO is directly applied to the HDR signal so as to obtain an LDR image, and this image can be displayed on a classical LDR display. There is a wide variety of TMOs, and many of them are non-linear operators.
In a field of scalable video compression (base layers, enhancement layer), in the prediction of the block $b_e$ of enhancement layer $I_e$ via the prediction of the block $\tilde{b}_e$ from a reference image of the enhancement layer $I_e$ using the motion vector $mv$ and the residual prediction error $r_b$ of the collocated blocks ($b_b$ and $\tilde{b}_b$) in the base layer, the first solution could be to obtain the prediction $p_e$ that is equal to the following formulation (1):

$$p_e = \tilde{b}_e + TMO^{-1}(r_b) \qquad (1)$$

The expression (1) could allow to build the prediction $p_e$ at the layer $I_e$:

- by taking into account the motion compensated block $\tilde{b}_e$ of the reference frames of the enhancement $I_e$ layer;
- and after, by modifying prediction of this block $\tilde{b}_e$ with the error $r_b$ of prediction of the base layer $I_b$, this error $r_b$ being expanded in the dynamic of the enhancement layer $I_e$ by using an inverse tone mapping operator $TMO^{-1}$.

Then the last step consists in encoding the residual error $r_e$ of prediction between the current block $b_e$ and its prediction $p_e$:

$$r_e = b_e - p_e \qquad (2)$$

But in opposite to the classical bit-depth scalability in which a simple left shift (multiplicative operation) is applied to the residual error $r_b$ (here, the left shift corresponds to the difference of the dynamic between the two layers $I_e$ and $I_b$), the $TMO^{-1}$ processing cannot be applied to the error residual of a prediction.
Zhan Ma et al. ["Smoothed reference inter-layer texture prediction for bit depth scalable video coding", Zhan Ma, Jiancong Luo, Peng Yin, Cristina Gomila and Yao Wang, SPIE 7543, Visual Information Processing and Communication, 75430P (January 18, 2010)] addresses an inconvenient to be caused by applying the $TMO^{-1}$ processing to the error residual of a prediction in the context of "base mode".
It is presented in the next paragraph an example of tone mapping operator (TMO) and inverse tone mapping operator (TMO$^{-1}$).

It is known to use Expand Operator (EO) or inverse Tone Mapping Operators (iTMO) to expand the dynamic range of an image or video sequence so as to address displays known as High Dynamic Range (HDR). These displays take as input floating point values that represent the physical luminance (in cd/m$^2$) that the display should achieve to reproduce.

Most of current camera record what is known as Low Dynamic Range (LDR) values, which correspond to a standardized color space used in LDR displays (e.g. BT.709, BT.2020). When this is the case, the term "luma" is used instead of "luminance" in this disclosure. The conversion from luma to luminance is performed by an EO or iTMO. Two types of operators are distinguished; EO represents the expansion of a LDR content when no information of a prior tone mapping has been performed (i.e., without knowing if the content was HDR at one point). On the contrary, iTMO reconstructs an HDR image or video sequence by performing the inverse operation performed by a TMO. Provided that the content was originally HDR, it has been tone mapped using a Tone Mapping Operator (TMO) and the iTMO uses information of the TMO to reconstruct the HDR image or video sequence.

An example of an EO is proposed by Akyüz et al. [Akyüz, A. O., Fleming, R., Riecke, B. E., Reinhard, E., and Bülthoff, H. H. (2007), "Do HDR displays support LDR content?", In ACM SIGGRAPH 2007 papers on - SIGGRAPH '07 (p. 38), New York, New York, USA: ACM Press. doi:10.1145/1275808.1276425] where the expansion is computed by:

$$L_W(x) = k \left( \frac{L_d(x) - L_{d,min}}{L_{d,max} - L_{d,min}} \right)^{\gamma} \qquad (3)$$

where k is the maximum luminance intensity of the HDR display, $\gamma$ is a non-linear scaling factor, $Lw(x)$ is the HDR luminance, and $Ld(x)$ is the LDR luma. Fitting experiments provide $\gamma$ values of 1, 2.2 or 0.45.

Another EO is developed by Masia et al. [Masia, B., Agustin, S., and Fleming, R. (2009), Evaluation of Reverse Tone Mapping Through Varying Exposure Conditions]. It was designed by conducting two psychophysical studies to analyze the behavior of an EO across a wide range of exposure levels. The author then used the results of these experiments to develop an expansion technique for exposed content. This technique performs a gamma expansion on each of the color channel:

$$C_W(x) = C_d^{\gamma}(x) \qquad (4)$$

where $\gamma$ is computed by:

$$\gamma(k) = ak + b = a \left( \frac{\log(L_{d,H}) - \log(L_{d,min})}{\log(L_{d,max}) - \log(L_{d,min})} \right) + b \qquad (5)$$

where $a$=10.44 and $b$=-6.282 are fitted by experimentation. One of the major drawbacks of this expansion technique is that it fails to utilize the dynamic range of the display to its full extent. As mentioned earlier, EO techniques reconstruct data that were not recorded by the camera.

Other techniques known as iTMO reconstruct an HDR image or video sequence from an LDR image or video sequence of which dynamics has been reduced previously. For example, Boitard et al. [Impact of Temporal Coherence-Based Tone Mapping on Video Compression, In Proceedings of EUSIPCO '13: Special Session on HDR-video, Marrakech, Morocco] first applies a Tone Mapping Operator (TMO) on an HDR image or video sequence. An example of a TMO is the one developed by Reinhard et al. [Reinhard, E., Stark, M., Shirley, P., and Ferwerda, J., "Photographic tone reproduction for digital images", ACM Transactions on Graphics 21 (July 2002)]. This operator modifies the luminance $Lw$ of an original picture to obtain a luma $Ld$ using a sigmoid defined by:

$$L_d = \frac{L_s}{1+L_s} \cdot \left(1 + \frac{L_s}{L_{white}^2}\right) \qquad (6)$$

where $L_{white}$ is a luminance value used to burn out areas with high luminance values, $Ld$ is a matrix of the same size as the original picture and contains luma values of pixels which are expressed in a lesser dynamic than $Lw$. Ls is a scaled matrix of the same size as the original picture and is computed by:

$$L_s = \frac{a}{k} \cdot L_w \qquad (7)$$

where $a$ is an exposure value, $k$ is the key of the picture, which corresponds to an indication of the overall brightness of the picture and is computed by:

$$k = exp\left(\frac{1}{N} \cdot \sum_{i=1}^{N} log\left(\delta + L_w(i)\right)\right) \qquad (8)$$

where N is the number of pixels of the picture, $\delta$ is a value to prevent singularities and $L_w(i)$ is the luminance value of the pixel i.

The values $a$ and $L_{white}$ are two fixed parameters of this TMO, for example at 18% for a and the maximum luminance of the picture for $L_{white}$. By fixing $L_{white}$ to infinity, it is possible to rewrite equation (6) as:

$$L_d = \frac{L_s}{1+L_s} \qquad (9)$$

In this case, the corresponding iTMO is computed by inverting equation (9) and (7) as follows:

$$L_s = \frac{L_d}{1-L_d} \qquad (10)$$

$$L_w = \frac{k}{a} \cdot L_s \qquad (11)$$

where k and $a$ are the same as in equation (7).

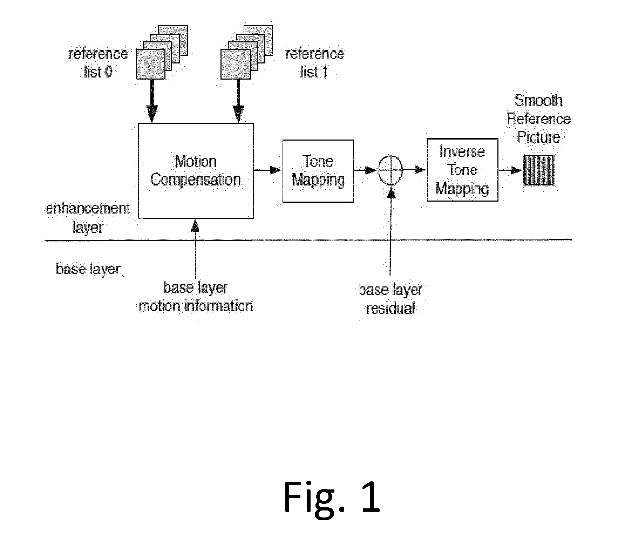

Referring again to the Zhan Ma et al., it proposes to process the prediction block $\tilde{b}_e$ that results from the motion compensation in the $I_e$ field by returning in the base layer $I_b$ ($TMO(\tilde{b}_e)$) and then back in the enhancement layer $I_e$ ($TMO^{-1}$). This can be understood through the following quotation with reference to Fig. 1, which quotation and Fig. 1 are quoted from the Zhan Ma et al. (except for the numbers of equations (12)-(14)).

Because the proposed smoothed reference prediction is effective if the co-located reference layer block is inter-coded. Otherwise, the texture prediction generated from the base layer reconstruction is preferred. The smoothening operations are conducted at the enhancement layer together with the information from the co-located base layer block, i.e., the base layer motion vectors and residues. The base layer motion information is utilized to do the motion compensation upon the enhancement layer reference frames. The motion compensated block is tone mapped and summed with base layer residual block before being inversely tone mapped to obtain the smoothed reference prediction. The process to construct the smoothed reference prediction is depicted in Fig. 1.

For the sake of simplicity, we will describe our approach on a two-layer structure: the high bit depth video (10/12 bits) is processed at the enhancement layer, and the low bit depth signal (8 bits) is encoded at the base layer. Assuming that $mv_b$ is the motion vector of the co-located base layer block, and $\tilde{f}e,n\text{-}k$ is the enhancement layer reference frame (n is the current frame number, k is determined by the co-located block reference index), the motion compensation (MC) is conducted on $\tilde{f}_{e,n\text{-}k}$ using $mv_b$ as in (12)

$$\tilde{b}_e = MC(\tilde{f}_{e,n-k}, mv_b) \qquad (12)$$

The smoothed reference prediction $p_e$ is then formed by (13)

$$p_e = TMO^{-1}\big(TMO(\tilde{b}_e) + r_b\big) \qquad (13)$$

where $r_b$ is the residue (or residual error) of the co-located base layer block, TMO and TMO$^{-1}$ are the tone mapping and inverse tone mapping operators. The enhancement layer residue $r_e$ is calculated by (14) where $be$ is the original block in enhancement layer.

$$r_e = b_e - p_e \qquad (14)$$

Equation (13) can be written as the following equation (15) by plugging equation (12) into equation (13).

$$p_e = TMO^{-1}\big(TMO\big(MC(\tilde{f}_{e,n-k}, mv_b)\big) + r_b\big) \qquad (15)$$

By analyzing equation (15), it can be seen that it may be disadvantageous to have to return in the field of LDR base layer $l_b$ in the objective to build the prediction in the enhancement layer because it is obvious that the *TMO*/*TMO*$^{-1}$ processing is not totally reversible. Thus, the prediction of the enhancement layer cannot have the same quality as the initial quality of prediction block $\tilde{b}_e$ that results from a motion compensation in the enhancement layer $l_e$. In other words, the *TMO*($\tilde{b}_e$) inevitably deteriorates the prediction block $\tilde{b}_e$.

Therefore, it is advantageous to improve the prediction $p_e$ of enhancement layer by re-considering the equation (15).

SUMMARY

According to one aspect of the present disclosure, there is provided a method including: applying inverse tone mapping operations to a block of a first layer and to a prediction block of the block of the first layer, respectively, computing a residual prediction error in a second layer with the difference between the inverse tone mapped prediction block of the first layer and the inverse tone mapped block of the first layer, and computing a prediction of a block of the second layer by adding a prediction block of the second layer to the residual prediction error.

According to another aspect of the present disclosure, there is provided a device comprising: a first functional element for applying an inverse tone mapping operation to a block of a first layer and to a prediction block of the first layer, respectively, a second functional element for computing a residual prediction error in a second layer with the difference between the inverse tone mapped prediction block of the first layer and the inverse tone mapped block of the first layer, and a third functional element for computing a prediction of a block of the second layer by adding a prediction block of the second layer to the residual prediction error.

According to further another aspect of the present disclosure, there is provided a method including: decoding a second layer residual prediction error, applying inverse tone mapping operations to a reconstructed block of a first layer and to a prediction block of the block of the first layer, respectively, computing a residual prediction error in a second layer with the difference between the inverse tone mapped prediction block of the first layer and the inverse tone mapped block of the first layer, computing a prediction of a block of the second layer by adding a prediction block of the second layer to the residual prediction error, and reconstructing a block of the second layer by adding the prediction error to the prediction of a block of the second layer.

According to yet further another aspect of the present disclosure, there is provided a device comprising: a first functional element for decoding a second layer residual prediction error, a second functional element for applying inverse tone mapping operations to a reconstructed block of a first layer and to a prediction block of the block of the first layer, respectively, a third functional element computing a residual prediction error in a second layer with the difference between the inverse tone mapped prediction block of the first layer and the inverse tone mapped block of the first layer, a fourth functional element for computing a prediction of a block of the second layer by adding a prediction block of the second layer to the residual prediction error, and a fifth functional element for reconstructing a block of the second layer by adding the prediction error to the prediction of a block of the second layer.

The object and advantages of the present disclosure will be realized and attained by means of the elements and combinations particularly pointed out in the claims.

It is to be understood that both the foregoing general description and the following detailed description are exemplary and explanatory and are not restrictive of the disclosure, as claimed.

BRIEF DESCRIPTION OF THE DRAWINGS

These and other aspects, features and advantages of the present disclosure will become apparent from the following description in connection with the accompanying drawings in which:

Fig. 1 is a block diagram showing an example of smooth reference picture prediction;

Fig. 2 is a schematic block diagram illustrating an example of a coder according to an embodiment of the present disclosure;

Figs. 3A and 3B are flow diagrams illustrating an exemplary coding method according to an embodiment of the present disclosure;

Fig. 4 is a schematic block diagram illustrating an example of a decoder according to an embodiment of the present disclosure; and

Figs. 5A and 5B are flow diagrams a flow diagram illustrating an exemplary decoding method according to an embodiment of the present disclosure; and

Fig. 6 is a schematic block diagram illustrating an example of a hardware configuration of an apparatus according to an embodiment of the present disclosure.

DESCRIPTION OF EMBODIMENTS

In the following description, various aspects of an exemplary embodiment of the present disclosure will be described. For the purpose of explanation, specific configurations and details are set forth in order to provide a thorough understanding. However, it will also be apparent to one skilled in the art that the present disclosure may be implemented without the specific details present herein.

According to an embodiment of the present disclosure, it is proposed to address the disadvantage to be caused by the $TMO$ / $TMO^{-1}$ processing as seen in the above mentioned equation (15).

Thus, in order to establish the prediction $p_e$ of the current block $be$ of the enhancement layer $I_e$, the proposed embodiment comprises the following solutions:

- the motion compensated prediction block $\tilde{b}_e$ of the reference frames of the enhancement layer $I_e$ is kept, and

- the residue $r_b$ of the co-located base layer blocks (current block and motion compensated block) is added to the prediction block $\tilde{b}_e$, wherein the residual error prediction being actually processed in the dynamic of enhancement layer $I_e$.

(Combined prediction in SVC encoding scheme)

Hereinafter, an application of the embodiment of the present disclosure is described with reference to the combined prediction in SVC (Scalable Video Coding) encoding scheme.

As previously mentioned, for the construction of the prediction of the current block *be* of the enhancement layer $l_e$, we consider:

- the prediction block $\tilde{b}_e$ of the reference frames of the enhancement layer $l_e$ via a motion vector *mv* and one of the reference frames $\tilde{f}_{e,n\text{-}k}$ of the enhancement layer $l_e$, with:

  o *n* is the number of reference frames in the buffer (of reference frames previously coded/decoded);
  o k is the reference frame index in the buffer (of reference frames),

$$\tilde{b}_e = MC(\tilde{f}_{e,n-k}, mv) \qquad (16)$$

- and as to the residual error $r_b$ of prediction of the base layer $l_b$ between the blocks $b_b$ and $\tilde{b}_b$, these two blocks being respectively the collocation of $\tilde{b}_e$ and $\tilde{b}_e$ of the enhancement layer $l_e$. In fact, this residual error $r_b$ of prediction of the base layer needs to be transformed in the HDR enhancement layer.

Regarding this residual error $r_b$, initially this error $r_b$ is:

$$r_b = b_b - \tilde{b}_b \qquad (17)$$

where

$$\tilde{b}_b = MC(\tilde{f}_{b,n-k}, mv) \qquad (18)$$

Regarding the prediction block $\tilde{b}_b$ of the reference frames of the base layer $l_b$ via a motion vector *mv* and one of the reference frames $\tilde{f}_{b,n\text{-}k}$ of the base layer $l_b$,

- *n* is the number of reference frames in the buffer (of reference frames previously coded/decoded)
- *k* is the reference frame index in the buffer (of reference frames).

In fact, in the objective to process the residual error $r_b^e$ in the dynamic of the enhancement layer $l_e$ that may correspond to the residual error $r_b$ in the base layer, we simply transform each term of the equation (17) in the dynamics of the enhancement layer $l_e$ using an inverse tone mapping operator (*TMO$^{-1}$*), as follows:

$$r_b^e = TMO^{-1}(b_b) - TMO^{-1}(\tilde{b}_b) \qquad (19)$$

This equation (19) can be written as the following equation (20) by plugging equation (18) into equation (19).

$$r_b^e = TMO^{-1}(b_b) - TMO^{-1}\big(MC(\tilde{f}_{b,n-k}, mv)\big) \quad (20)$$

Finally, the prediction $p_e$ of the block of the enhancement layer $l_e$ becomes:

$$p_e = \tilde{b}_e + r_b^e \quad (21)$$

The residual error $r_e$ to encode is expressed as follow:

$$r_e = b_e - p_e \quad (22)$$

Equation (22) can be also expressed as follows in view of equations (19) and (21):

$$r_e = b_e - \tilde{b}_e - r_b^e \ ,$$

then

$$r_e = b_e - \tilde{b}_e - (TMO^{-1}(b_b) - TMO^{-1}(\tilde{b}_b))$$

The expressions in equations (19) and (20) on the residual error of the base layer and the prediction of the current block correspond to the principal object of the proposal according to the present disclosure.

It should be noted that, though implicit, the block $\tilde{b}_b$ of LDR base layer represents a reconstructed block coded/decoded using residual error $r_b$ of the block of LDR base layer.

An embodiment of the present disclosure is related to coding and decoding of a block based HDR scalable video having a tone mapped base layer $l_b$ by a tone mapping operator (TMO) dedicated to the LDR video, and an enhancement layer $l_e$ dedicated to the HDR video. The principle of the present disclosure focuses on the inter image prediction of the block of the HDR layer taking into account the prediction mode (base mode) used for the collocated block of the LDR base layer.

In this disclosure, the residual error of prediction of the collocated block of the LDR base layer uses the inverse tone mapping operator (TMO$^{-1}$) in the case of inter-image prediction.

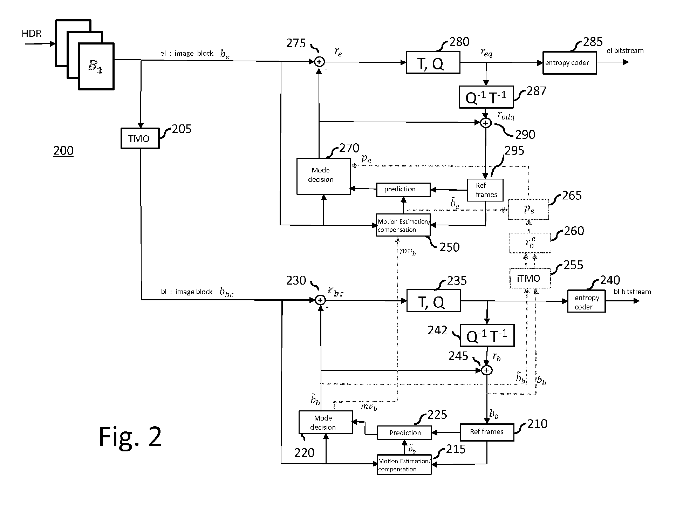

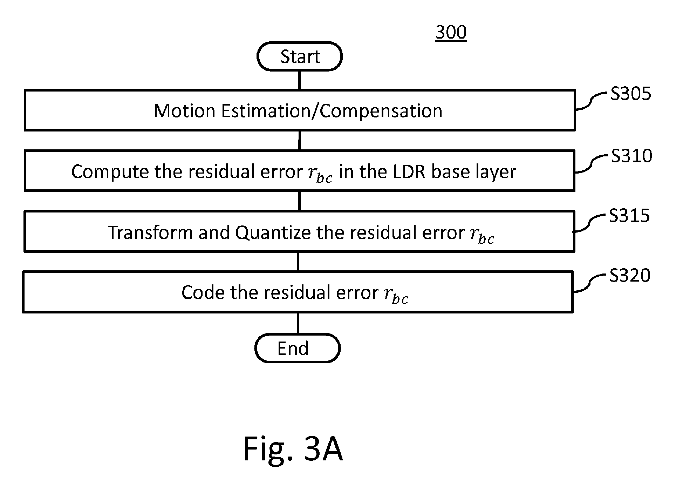

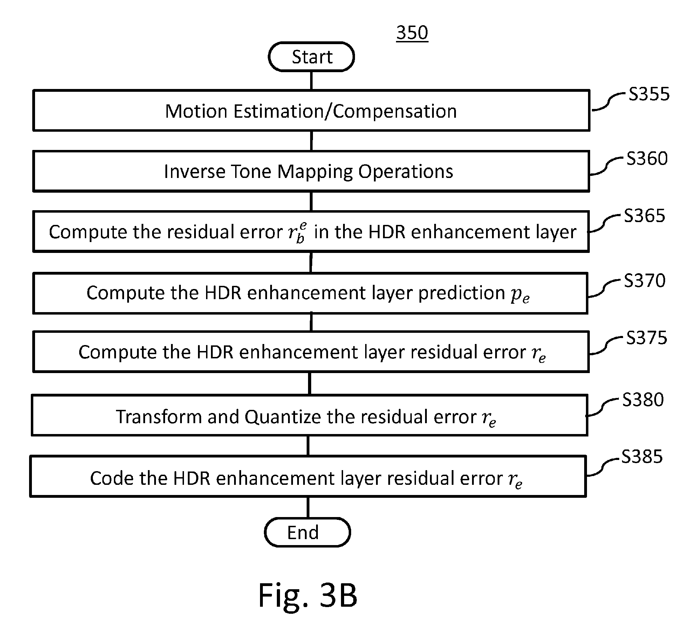

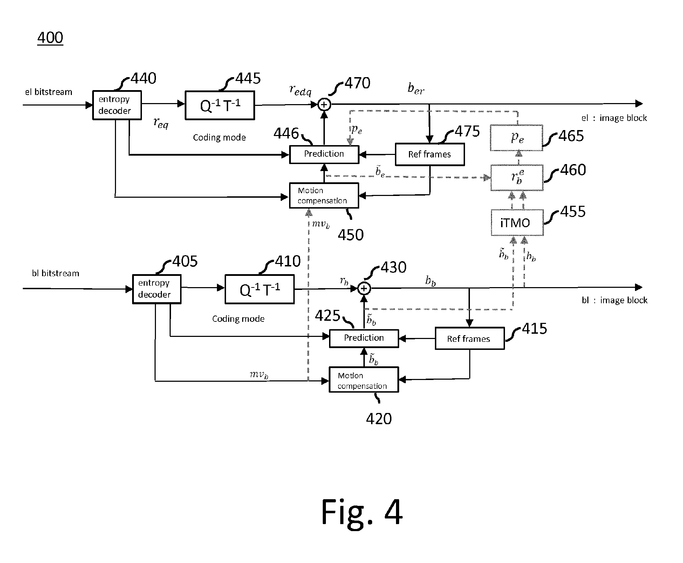

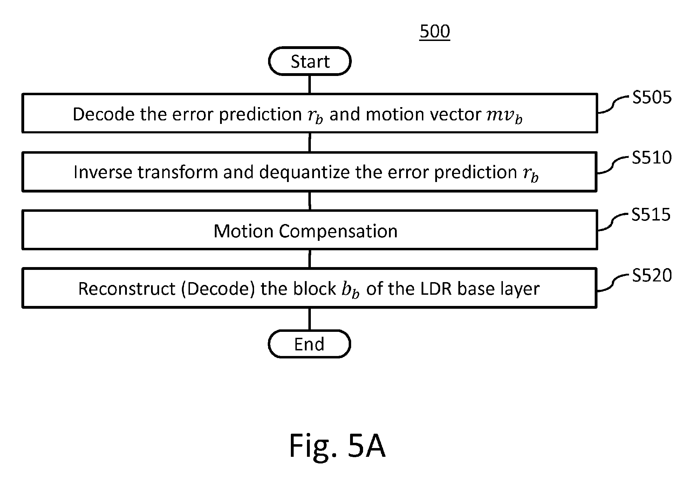

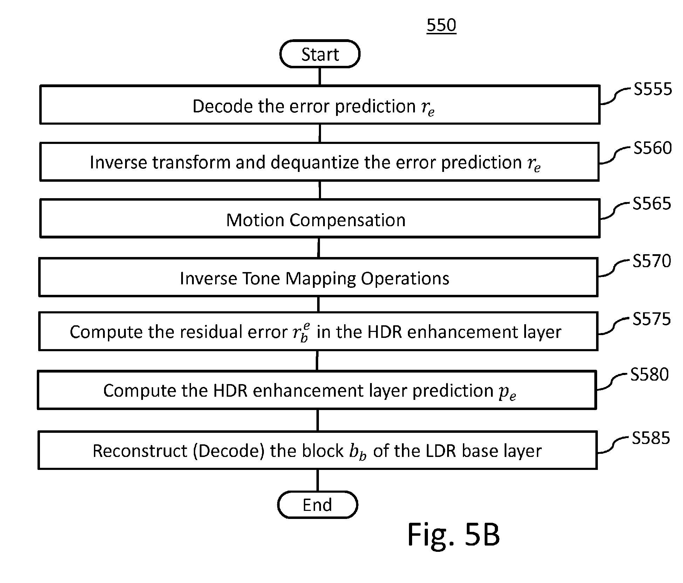

In the following descriptions related to the coder (Figs. 2 and 3) and the decoder (Figs. 4 and 5), only the inter image prediction mode using the motion vector $mv_b$ is described, because the disclosed inter layer (base layer and enhancement layer) prediction mode uses the vector $mv_b$. It is well known that the function of the prediction box using a given RDO (Rate-Distortion Optimization) criterion resides on the determination of the best prediction mode from:

• The intra and inter image predictions at the base layer level, and

• The intra, inter image and inter layer predictions at the enhancement layer level.

< Coder >

Fig. 2 is a schematic block diagram illustrating an example of a coder according to an embodiment of the present disclosure and Figs. 3A and 3B are flow diagrams illustrating an exemplary coding method according to an embodiment of the present disclosure.

An example of a scalable coding process will be described with reference to Figs. 2, 3A and 3B.

As shown in Fig. 2, the coder 200 generally comprises two parts, one is the first coder elements 205-245 for coding base layer and the other is the second coder elements 250-295 for coding enhancement layer.

An original image block $\tilde{b}_e$ of HDR enhancement layer (el) is tone mapped by the TMO (Tone mapping Operator) 205 to generate an original tone mapped image block $b_{bc}$ of LDR base layer (bl). The original image block $b_e$ of HDR enhancement layer may have been stored in a buffer or storage device of an apparatus.

Coding on base layer (bl):

Here, it is considered a method 300 for coding the original base layer image block $b_{bc}$ with reference to Figs. 2 and 3A.

With the original image block $b_{bc}$ and the previously decoded images stored in the reference frames buffer 210, the motion estimator 215 determines the best inter image prediction image block $\tilde{b}_b$ with the motion vector $mv_b$ (Fig. 3A, step 305).

If the element 220 for mode decision process selects the inter image prediction image block $\tilde{b}_b$ (225), the residual prediction error $r_{bc}$ is computed with the difference between the original image block $b_{bc}$ and the prediction image block $\tilde{b}_b$ by the combiner 230 (Fig. 3A, step 310).

The residual prediction error $r_{bc}$ is transformed and quantized by the transformer/quantizer 235 (Fig. 3A, step 315), then finally entropy coded by the entropy coder 240 and sent in the base layer bit stream (Fig. 3A, step 320).

Besides, the decoded block $\tilde{b}_b$ is locally rebuilt, by adding the inverse transformed and quantized prediction error $r_b$ made by the inverse transformer/dequantizer 242 to the prediction image block $\tilde{b}_b$ by the combiner 245. The reconstructed (or decoded) frame is stored in the base layer reference frames buffer 210.

It should be noted that the residual prediction errors $r_{bc}$ and $r_b$ are different each other due to the quantization process by the transformer/quantizer 235. It is the reason why, only $r_b$ is considered at the decoder and the coder for the enhancement layer as will be discussed below.

Coding on enhancement layer (el):

Hereinafter, it is considered a method 350 for coding the original enhancement layer image block $b_e$ with reference to Figs. 2 and 3B. It should be noted that, according to the present embodiment, the structure of the second coder elements 250-295 (except for elements 255-265) for enhancement layer are the same as the first coder elements 210-245 for base layer.

The block $\tilde{b}_b$ of the LDR base layer $l_b$ is coded in inter image mode in this example. Therefore, the motion vector $mv_b$ of the collocated block $\tilde{b}_b$ of the LDR base layer can be considered for the current block of the HDR enhancement layer.

With this motion vector $mv_b$, the motion compensator 250 determines the motion compensated prediction block $\tilde{b}_e$ at the HDR enhancement layer level and the motion compensator 215 (in the coder elements for base layer) determines the motion compensated prediction block $\tilde{b}_b$ at the LDR base layer level (Fig. 3B, step 355).

The functional element (iTMO: inverse Tone Mapping Operator) 255 applies inverse tone mapping operations to the prediction block $\tilde{b}_b$ of the LDR base layer and to the collocated (reconstructed or decoded) block $\tilde{b}_b$ of the LDR base layer, respectively (Fig. 3B, step 360).

The functional element 260 computes the residual prediction error $r_b^e$ in the HDR enhancement layer that corresponds to the prediction error $r_b$ in the LDR base layer by calculating the difference between the TMO$^{-1}$ (inversed tone mapping operation) of the collocated block $\tilde{b}_b$ and TMO$^{-1}$ of its temporal prediction block $\tilde{b}_b$ of the LDR base layer (Fig. 3B, step 365).

The functional element 265 computes the HDR enhancement layer (inter layer) prediction $p_e$ by adding the prediction block $\tilde{b}_e$ of the HDR enhancement layer to the residual prediction error $r_b^e$ (Fig. 3B, step 370).

If the mode decision process 270 selects the HDR enhancement layer (inter layer) prediction $p_e$, the HDR enhancement layer residue (residual prediction error) $r_e$ is computed with the difference between the original enhancement layer image block $b_e$ and the HDR enhancement layer (inter layer) prediction $p_e$ by the combiner 275 (Fig. 3B, step 375), and then the HDR enhancement layer residue (residual prediction error) $r_e$ is transformed and quantized by the transformer/quantizer 280 ($r_{eq}$) (Fig. 3B, step 380). The sign "$r_e$" represents the original enhancement layer prediction error before the quantization is applied and the sign "$r_{eq}$" represents the quantized enhancement layer prediction error.

Then, the quantized HDR enhancement layer residue (residual prediction error) $r_{eq}$ is entropy coded by the entropy coder 285 (Fig. 3B, step 385) and sent in the enhancement layer bit stream.

Finally, the decoded block $b_e$ is locally rebuilt, by adding the inverse transformed and quantized prediction error $r_e$ by the inverse transformer/dequantizer 287 ($r_{edq}$) to the HDR enhancement layer (inter layer) prediction $p_e$ by the combiner 290. The reconstructed (or decoded) image is stored in the enhancement layer reference frames buffer 295. The sign "$r_{edq}$" represents the dequantized enhancement layer prediction error, which dequantized error "$r_{edq}$" is different from the original error "$r_e$" because of the quantization/dequantization process.

Fig. 4 is a schematic block diagram illustrating an example of a decoder according to an embodiment of the present disclosure and Figs. 5A and 5B are flow diagrams illustrating an exemplary decoding method according to an embodiment of the present disclosure.

Hereinafter an example of a scalable decoding process will be described with reference to Figs. 4, 5A and 5B.

As shown in Fig. 4, the decoder 400 generally comprises two parts, one is the first decoder elements 405-430 for decoding base layer and the other is the second coder elements 440-475 for decoding enhancement layer.

Decoding on base layer (bl):

Here, it is considered a method 500 for reconstructing (decoding) the base layer image block $\tilde{b}_b$ with reference to Figs. 4 and 5A.

The base layer (bl) bitstream is input to the entropy decoder 405. From the base layer bitstream, for a given block, the entropy decoder 405 decodes the transformed and quantized prediction error $r_b$, the associated motion vector $mv_b$ and an index of reference frame (Fig. 5A, step 505). The base layer (bl) bitstream may be provided to the decoder 400 from an external source in which it has been stored through communications or transmission or from a computer readable storage medium on which it has been recorded.

The decoded residual prediction error $r_b$ is inverse transformed and dequantized by the inverse transformer/dequantizer 410 (Fig. 5A, step 510).

With the reference image stored in and provided from the base layer reference frames buffer 415, the motion vector $mv_b$ and the index of reference frame provided from the entropy decoder 405, the motion compensator 420 determines the inter image prediction block $\tilde{b}_b$ (Fig. 5A, step 515).

The reconstructed (or decoded) block $\tilde{b}_b$ is locally rebuilt (Fig. 5A, step 520), by adding the inverse transformed and dequantized prediction error $r_b$ to the prediction block $\tilde{b}_b$ (420/425) by the combiner 430. The reconstructed (or decoded) frame is stored in the base layer reference frames buffer 415, which reconstructed (or decoded) frames being used for the next base layer inter image prediction.

Decoding on enhancement layer (el):

Hereinafter, it is considered a method 550 for decoding the enhancement layer image block $b_e$. It should be noted that, according to the present embodiment, the structure of the second coder elements 440-475 (except for elements 455-465) for enhancement layer are the same as the first coder elements 405-430 for base layer.

The enhancement layer (el) bitstream is input to the entropy decoder 440. From the enhancement bitstream, for a given block, the entropy decoder 440 decodes the transformed and quantized prediction error ($re_q$) (Fig. 5B, step 555). The enhancement layer (el) bitstream may be provided to the decoder 440 from an external source in which it has been stored through communications or transmission or from a computer readable storage medium on which it has been recorded.

The residual prediction error $r_{eq}$ is inverse transformed and dequantized ($r_{edq}$) by the inverse transformer/dequantizer 445 (Fig. 5B, step 560).

If the coding mode of the block $b_e$ to decode corresponds to the inter-layer mode, then the motion vector $mv_b$ of the collocated block $\tilde{b}_b$ of the LDR base layer can be considered for the block $b_e$ of the HDR enhancement layer.

With this motion vector $mv_b$, the motion compensator 450 determines the motion compensated prediction block $\tilde{b}_e$ at the HDR enhancement layer level and the motion compensator 420 (in the coder elements for base layer) determines the motion compensated prediction block $\tilde{b}_b$ at the LDR base layer level (Fig. 5B, step 565).

The functional element (iTMO: inverse Tone Mapping Operator) 455 applies inverse tone mapping operations to the prediction block $\tilde{b}_b$ of the LDR base layer and to the collocated (reconstructed or decoded) block $\tilde{b}_b$ of the LDR base layer, respectively (Fig. 5B, step 570).

The functional element 460 computes the residual error $r_b^e$ in the HDR enhancement layer that corresponds to the residual prediction error $r_b$ in the LDR base layer by calculating the difference between the TMO$^{-1}$ (inversed tone mapping operation) of the collocated block $\tilde{b}_b$ and TMO$^{-1}$ of its temporal prediction block $\tilde{b}_b$ of the LDR base layer (Fig. 5B, step 575).

The functional element 465 computes the HDR enhancement layer (inter layer) prediction $p_e$ by adding the prediction block $\tilde{b}_e$ of the HDR enhancement layer to the residual error $r_b^e$ (Fig. 5B, step 580).

The reconstructed (or decoded) enhancement layer block $b_{er}$ is built, by adding the inverse transformed and dequantized prediction error block $r_{edq}$ to the prediction $p_e$ (446) by the combiner 470 (Fig. 5B, step 585). The reconstructed (or decoded) frame is stored in the enhancement layer reference frames buffer 475, which reconstructed (or decoded) frames being used for the next enhancement layer inter image prediction. The sign " $b_{er}$" represents the reconstructed (decoded) enhancement layer block, which is different from the original enhancement layer block be because of the quantization process applied to the prediction error $r_{edq}$ used to rebuild the reconstructed (decoded) enhancement layer block $b_{er}$.

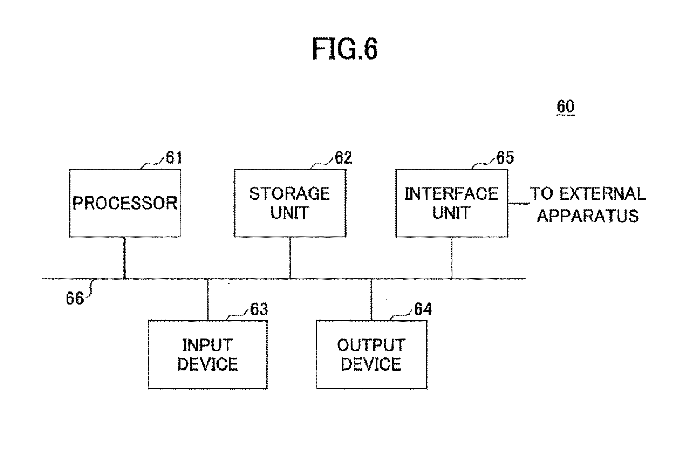

Fig. 6 is a schematic block diagram illustrating an example of a hardware configuration of an apparatus according to an embodiment of the present disclosure. An apparatus 60 illustrated in Fig. 6 includes a processor 61, such as a CPU (Central Processing Unit), a storage unit 62, an input device 63, and an output device 64, and an interface unit 65 which are connected by a bus 66. Of course, constituent elements of the computer 60 may be connected by a connection other than a bus connection using the bus 66.

The processor 61 controls operations of the apparatus 60. The storage unit 62 stores at least one program to be executed by the processor 61, and various data, including the base layer data and the enhancement layer data, parameters used by computations performed by the processor 61, intermediate data of computations performed by the processor 61, or the like.

The storage unit 62 may be formed by any suitable storage or means capable of storing the program, data, or the like in a computer-readable manner. Examples of the storage unit 62 include non-transitory computer-readable storage media such as semiconductor memory devices, and magnetic, optical, or magneto-optical recording media loaded into a read and write unit.

The program causes the processor 61 to perform a process of at least one of the coder 200 (Fig. 2) and decoder 400 (Fig. 4), in order to cause the apparatus 60 to perform the function of at least one of the coder 200 and decoder 400.

The input device 63 may be formed by a keyboard or the like for use by the user to input commands, to make user's selections, to specify thresholds and parameters, or the like with respect to the apparatus 60. The output device 64 may be formed by a display device to display messages or the like to the user. The input device 63 and the output device 64 may be formed integrally by a touchscreen panel, for example. The interface unit 65 provides an interface between the apparatus 60 and an external apparatus. The interface unit 65 may be communicable with the external apparatus via cable or wireless communication.

As it has been discussed above, the embodiment of the present disclosure is related to the prediction of the current block $b_e$ of the HDR enhancement layer $I_e$ via the prediction block $\tilde{b}_e$ from a reference image of the HDR enhancement layer $I_e$ using the motion vector $mv_b$ and the residual error $r_b$ of the collocated blocks ($b_b$ and $\tilde{b}_b$) in the LDR base layer.

An advantage of the proposed embodiment is that the prediction $p_e$ of the block of the enhancement layer $I_e$ can be obtained without applying an inverse tone mapping operator (TMO$^{-1}$) to an tone mapped prediction block $\tilde{b}_b$ (TMO($\tilde{b}_e$)) of the HDR enhancement layer and the residual error $r_b$ of the collocated block of the LDR base layer as can be seen from equations (19) and (21). As mentioned above, since the TMO/TMO$^{-1}$ is not reversible and thus the TMO/TMO$^{-1}$ processing would deteriorate drastically the quality of the prediction dedicated to the current block of the enhancement layer, an improved prediction $p_e$ of the block of the enhancement layer $I_e$ can be obtained by the proposed embodiment that does not employ the TMO/TMO$^{-1}$ processing.

(SVC base mode implementation)

Another application of the embodiment of the present disclosure is described below with reference to the SVC base mode implementation.

From the technical implementation of the SVC base mode, for the prediction of the current block be of the enhancement layer $I_e$, we reconsider the motion vector $mv_b$ of the collocated block $b_b$ as follows:

- the motion compensated prediction block $\tilde{b}_b$ of the base layer $I_b$ :

$$\tilde{b}_b = MC(\tilde{f}_{b,n-k}, mv_b) \qquad (21)$$

- the motion compensated prediction block $\tilde{b}_e$ of the enhancement layer $I_e$ using the motion vector $mv_b$ of the collocated block of the base layer (that corresponds to the principle of the base mode) $\tilde{b}_b$:

$$\tilde{b}_e = MC(\tilde{f}_{e,n-k}, mv_b) \qquad (22)$$

- then, the combined prediction $p_e$ of the current block of the enhancement layer $I_e$ is:

$$p_e = \tilde{b}_e + \left( TMO^{-1}(b_b) - TMO^{-1}\big(MC(\tilde{f}_{b,n-k}, mv_b)\big) \right) \qquad (23)$$

In this implementation, the residual error $r_e$ to encode still being:

$$r_e = b_e - p_e \qquad (24)$$

(Specific mode implementation)

Yet another application of the embodiment of the present disclosure is described below with reference to the specific mode implementation.

Here, for the prediction of current block $be$ of the enhancement layer $I_e$, we use the motion vector $mv_e$ of the block ($mv_e$ being given independently of the base layer, for example by a specific motion estimator dedicated to the enhancement layer $I_e$). This vector $mv_e$ is used to realize the prediction by motion compensation of the collocated block $\tilde{b}_b$ of the base layer.

Referring to Fig. 2, motion estimation/compensation of the prediction block $\tilde{b}_e$ at the enhancement layer level is performed by the element 250 using the motion vector $mv_e$ and motion compensation of the prediction block $\tilde{b}_b$ at the base layer level is performed by the element 215 using the motion vector $mv_e$ to be provided from the element 250 (in the opposite direction of the arrow shown for $mv_b$ in Fig. 2).

Referring to Fig. 4, motion compensation of the prediction block $\tilde{b}_e$ at the enhancement layer level is performed by the element 450 using the motion vector $mv_e$ and motion compensation of the prediction block $\tilde{b}_b$ at the base layer level is performed by the element 420 using the motion vector $mv_e$ to be provided from the element 450 (in the opposite direction of the arrow shown for $mv_b$ in Fig. 4).

- the motion compensated prediction block $\tilde{b}_e$ of the enhancement layer $I_e$

$$\tilde{b}_e = MC(\tilde{f}_{e,n-k}, mv_e) \qquad (25)$$

- the combined prediction $p_e$ of the current block of the enhancement layer $I_e$ is:

$$p_e = \tilde{b}_e + \left( TMO^{-1}(b_b) - TMO^{-1}\big(MC(\tilde{f}_{b,n-k}, mv_e)\big) \right) \qquad (26)$$

In this implementation, the residual error $r_e$ to encode still being:

$$r_e = b_e - p_e \qquad (27)$$

As can be seen in equations (24) and (27), since the HDR enhancement layer residue (residual error) $r_e$ obtained in the above described two implementations is expressed in the same equation (22), it should be noted that the above discussed encoding method and decoding method can be also applied to the above two implementation with any modifications that may be made by a person skilled in the art.

In this disclosure, the embodiments of the present disclosure have been discussed in the context of bit depth scalability for HDR layer in SVC encoding/decoding scheme. It should be noted that the present disclosure may applied to any multi-layer encoding/decoding scheme such as MVC (Multi-view Video Coding), SVC (Scalable Video Coding), SHVC (Scalable High-efficiency Video Coding) or CGS (Coarse-Grain quality Scalable Coding) as defined by the HEVC (High Efficiency Video Coding) recommendation. Thanks to such any multi-layer encoding/decoding scheme, frame rate, resolution, quality, bit depth and so on can be coded.

Implementations of the various processes and features described herein may be embodied in a variety of different equipment or applications, particularly, for example, equipment or applications. Examples of such equipment include an encoder, a decoder, a post-processor processing output from a decoder, a pre-processor providing input to an encoder, a video coder, a video decoder, a video codec, a web server, a set-top box, a laptop, a personal computer, a cell phone, a PDA, and other communication devices. As should be clear, the equipment may be mobile and even installed in a mobile vehicle.

Additionally, the methods may be implemented by instructions being performed by a processor, and such instructions (and/or data values produced by an implementation) may be stored on a processor-readable medium such as, for example, an integrated circuit, a software carrier or other storage device such as, for example, a hard disk, a compact diskette ("CD"), an optical disc (such as, for example, a DVD, often referred to as a digital versatile disc or a digital video disc), a random access memory ("RAM"), or a read-only memory ("ROM"). The instructions may form an application program tangibly embodied on a processor-readable medium. Instructions may be, for example, in hardware, firmware, software, or a combination. Instructions may be found in, for example, an operating system, a separate application, or a combination of the two. A processor may be characterized, therefore, as, for example, both a device configured to carry out a process and a device that includes a processor-readable medium (such as a storage device) having instructions for carrying out a process. Further, a processor-readable medium may store, in addition to or in lieu of instructions, data values produced by an implementation.

As will be evident to one of skill in the art, implementations may produce a variety of signals formatted to carry information that may be, for example, stored or transmitted. The information may include, for example, instructions for performing a method, or data produced by one of the described implementations. For example, a signal may be formatted to carry as data the rules for writing or reading the syntax of a described embodiment, or to carry as data the actual syntax-values written by a described embodiment. Such a signal may be formatted, for example, as an electromagnetic wave (for example, using a radio frequency portion of spectrum) or as a baseband signal. The formatting may include, for example, encoding a data stream and modulating a carrier with the encoded data stream. The information that the signal carries may be, for example, analog or digital information. The signal may be transmitted over a variety of different wired or wireless links, as is known. The signal may be stored on a processor-readable medium.

A number of implementations have been described. Nevertheless, it will be understood that various modifications may be made. For example, elements of different implementations may be combined, supplemented, modified, or removed to produce other implementations. Additionally, one of ordinary skill will understand that other structures and processes may be substituted for those disclosed and the resulting implementations will perform at least substantially the same function(s), in at least substantially the same way(s), to achieve at least substantially the same result(s) as the implementations disclosed. Accordingly, these and other implementations are contemplated by this application.

## Claims

1. A method (350), including:

   applying (S360) inverse tone mapping operations to a block ($b_b$) of a first layer ($I_b$) and to a prediction block ($\tilde{b}_b$) of the block ($b_b$) of the first layer ($I_b$), respectively,

   computing (S365) a residual prediction error $\left( r_b^e \right)$ in a second layer ($I_e$) with the difference between the inverse tone mapped prediction block ($\tilde{b}_b$) of the first layer ($I_b$) and the inverse tone mapped block ($b_b$) of the first layer ($I_b$), and

   computing (S370) a prediction ($p_e$) of a block of the second layer ($I_e$) by adding a prediction block ($\tilde{b}_e$) of the second layer to the residual prediction error $\left( r_b^e \right)$.

2. The method according to claim 1, wherein the method further including computing (S375) a second layer residual prediction error ($r_e$) with the difference between a block *(be)* of the second layer ($I_e$) and the prediction ($p_e$) of the

block of the second layer ($l_e$).

3. The method according to claim 2, wherein the method further including applying (S380) a transformation and quantization to the second layer residual prediction error ($r_e$) and coding (S385) the second layer quantized residual error ($r_{eq})$.

4. The method according to any one of claims 1-3, wherein the prediction block ($\tilde{b}_b$) at the first layer level is motion estimated/compensated (S305) and the prediction block ($\tilde{b}_e$) at the second layer level is motion compensated (S355) using a motion vector ($mv_b$) of the block ($b_b$) of the first layer ($l_b$).

5. The method according to any one of claims 1-3, wherein the prediction block ($\tilde{b}_e$) at the second layer level is motion estimated/compensated (S355) and the prediction block ($\tilde{b}_b$) at the first layer level is motion compensated (S305) using a motion vector ($mv_e$) of the block ($b_e$) of the second layer ($l_e$).

6. A device (200) comprising:

   a first functional element (255) for applying an inverse tone mapping operation to a block ($b_b$) of a first layer ($l_b$) and to a prediction block ($\tilde{b}_b$) of the first layer ($l_b$), respectively,

   a second functional element (260) for computing a residual prediction error ($r_b^e$) in a second layer ($l_e$) with the difference between the inverse tone mapped prediction block ($\tilde{b}_b$) of the first layer ($l_b$) and the inverse tone mapped block ($b_b$) of the first layer ($l_b$), and

   a third functional element (265) for computing a prediction ($p_e$) of a block of the second layer ($l_e$) by adding a prediction block ($\tilde{b}_e$) of the second layer to the residual prediction error ($r_b^e$) .

7. The device according to claim 6, wherein the device further including a fourth functional element (275) for computing a second layer residual error ($r_e$) with the difference between a block ($b_e$) of the second layer ($l_e$) and the prediction ($p_e$) of the block of the second layer ($l_e$).

8. The device according to claim 7, wherein the device further including a fifth functional element (280) for applying a transformation and quantization to the second layer residual prediction error ($r_e$) and a sixth functional element (285) for coding the second layer quantized residual prediction error ($r_{eq}$).

9. The device according to any one of claims 6-8, wherein the device further including a functional element (215) for motion estimating/compensating the prediction block ($\tilde{b}_b$) at the first layer level and a functional element (250) for motion compensating the prediction block ($\tilde{b}_e$) at the second layer level using a motion vector ($mv_b$) of the block ($b_b$) of the first layer ($l_b$).

10. A method (550), including:

    decoding a second layer residual prediction error ($r_{eq}$),
    applying (S570) inverse tone mapping operations to a reconstructed block ($b_b$) of a first layer ($l_b$) and to a prediction block ($\tilde{b}_b$) of the block ($b_b$) of the first layer ($l_b$), respectively,

    computing (S575) a residual prediction error ($r_b^e$) in a second layer ($l_e$) with the difference between the inverse tone mapped prediction block ($\tilde{b}_b$) of the first layer and the inverse tone mapped block ($b_b$) of the first layer,

    computing (S580) a prediction ($p_e$) of a block of the second layer ($l_e$) by adding a prediction block ($\tilde{b}e$) of the second layer to the residual prediction error $575$ and

    reconstructing a block ($b_{er}$) of the second layer ($l_e$) by adding the prediction error ($r_{edq}$) to the prediction ($p_e$) of a block of the second layer ($l_e$).

11. The method according to claims 10, wherein the prediction block ($\tilde{b}_b$) at the first layer level and the prediction block ($\tilde{b}_e$) at the second layer level are motion compensated (S515, S565) using a motion vector ($mv_b$) of the block ($b_b$) of the first layer ($l_b$).

12. The method according to claim 10 or 11, wherein the block ($b_b$) of the first layer ($l_b$) is reconstructed and the prediction

block ($\tilde{b}_b$) of the block ($b_b$) of the first layer ($l_b$) is obtained by:

decoding (S505) a first layer residual prediction error ($r_b$) and a motion vector ($mv_b$) associated with the prediction error ($r_b$),

motion compensating (S515) a block ($b_b$) of the first layer ($l_b$) using the motion vector ($mv_b$), and

adding the first layer residual prediction error ($r_b$) to the prediction block ($\tilde{b}_b$) of the first layer ($l_b$).

13. A device (400) comprising:

a first functional element (440) for decoding a second layer residual prediction error ($r_{eq}$),

a second functional element (455) for applying inverse tone mapping operations to a reconstructed block ($b_b$) of a first layer ($l_b$) and to a prediction block ($b_b$) of the block ($\tilde{b}_b$) of the first layer ($l_b$), respectively,

a third functional element (460) computing a residual prediction error $\left( r_b^e \right)$ in a second layer ($l_e$) with the difference between the inverse tone mapped prediction block ($\tilde{b}_b$) of the first layer and the inverse tone mapped block ($b_b$) of the first layer,

a fourth functional element (465) for computing a prediction ($p_e$) of a block of the second layer ($l_e$) by adding a prediction block ($\tilde{b}_e$) of the second layer to the residual prediction error $\left( r_b^e \right)$, and

a fifth functional element (470) for reconstructing a block ($b_{er}$) of the second layer ($l_e$) by adding the prediction error ($r_{edq}$) to the prediction ($p_e$) of a block of the second layer ($l_e$).

14. The device according to claim 13, wherein the device further including a functional element (420) for motion compensating the prediction block ($\tilde{b}_b$) at the first layer level and a functional element (450) for motion compensating the prediction block ($\tilde{b}_e$) at the second layer level using a motion vector ($mv_b$) of the block ($b_b$) of the first layer ($l_b$).

15. The device according to claim 13 or 14, the device further comprising:

a functional element (405) for decoding a first layer residual prediction error ($r_b$) and a motion vector ($mv_b$) associated with the prediction error ($r_b$),

a functional element (420) for motion compensating a block ($b_b$) of the first layer ($l_b$) using the motion vector ($mv_b$) to obtain the prediction block ($\tilde{b}_b$) of the block ($\tilde{b}_b$) of the first layer ($l_b$), and

a functional element (430) for adding the first layer residual prediction error ($r_b$) to the prediction block ($\tilde{b}_b$) of the first layer ($l_b$) to reconstruct the block ($b_b$) of the first layer ($l_b$).

Fig. 1

Fig. 2

<u>300</u>

```
                          ┌─────────┐
                          │  Start  │
                          └────┬────┘
┌────────────────────────────────────────────────────────┐
│          Motion Estimation/Compensation                │ ─── S305
└────────────────────────┬───────────────────────────────┘
┌────────────────────────────────────────────────────────┐
│  Compute the residual error $r_{bc}$ in the LDR base layer  │ ─── S310
└────────────────────────┬───────────────────────────────┘
┌────────────────────────────────────────────────────────┐
│  Transform and Quantize the residual error $r_{bc}$       │ ─── S315
└────────────────────────┬───────────────────────────────┘
┌────────────────────────────────────────────────────────┐
│          Code the residual error $r_{bc}$                 │ ─── S320
└────────────────────────┬───────────────────────────────┘
                          ┌────┴────┐
                          │   End   │
                          └─────────┘
```

# Fig. 3A

<u>350</u>

Fig. 3B

Fig. 4

$$500$$

Start

Decode the error prediction $r_b$ and motion vector $mv_b$ — S505

Inverse transform and dequantize the error prediction $r_b$ — S510

Motion Compensation — S515

Reconstruct (Decode) the block $b_b$ of the LDR base layer — S520

End

# Fig. 5A

550

Start

Decode the error prediction $r_e$ — S555

Inverse transform and dequantize the error prediction $r_e$ — S560

Motion Compensation — S565

Inverse Tone Mapping Operations — S570

Compute the residual error $r_b^e$ in the HDR enhancement layer — S575

Compute the HDR enhancement layer prediction $p_e$ — S580

Reconstruct (Decode) the block $b_b$ of the LDR base layer — S585

End

Fig. 5B

# FIG.6

Europäisches
Patentamt

European
Patent Office

Office européen
des brevets

**EUROPEAN SEARCH REPORT**

Application Number

EP 14 30 6322

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JUI-CHIU CHIANG ET AL: "Bit-depth scalable video coding using inter-layer prediction from high bit-depth layer", ACOUSTICS, SPEECH AND SIGNAL PROCESSING, 2009. ICASSP 2009. IEEE INTERNATIONAL CONFERENCE ON, IEEE, PISCATAWAY, NJ, USA, 19 April 2009 (2009-04-19), pages 649-652, XP031459313, ISBN: 978-1-4244-2353-8 * Section 2; Section 3 * | 1-15 | INV. H04N19/30 |
| A,D | ZHAN MA ET AL: "Smoothed reference inter-layer texture prediction for bit depth scalable video coding", PROCEEDINGS OF SPIE, vol. 7543, 1 January 2010 (2010-01-01), page 75430P, XP055047043, ISSN: 0277-786X, DOI: 10.1117/12.840280 * Section 2; Section 3 * | 1-15 | |
| A | SHYAM SUNDAR R ET AL: "Bit-depth scalable video coding using error residual correction", VISUAL COMMUNICATIONS AND IMAGE PROCESSING (VCIP), 2011 IEEE, IEEE, 6 November 2011 (2011-11-06), pages 1-4, XP032081431, DOI: 10.1109/VCIP.2011.6116060 ISBN: 978-1-4577-1321-7 * the whole document * | 1-15 | **TECHNICAL FIELDS SEARCHED (IPC)**<br><br>H04N |
| A | WO 2009/003499 A1 (FRAUNHOFER GES FORSCHUNG [DE]; WIEGAND THOMAS [DE]; WINKEN MARTIN [DE]) 8 January 2009 (2009-01-08) * figures 1, 5 * | 1-15 | |

The present search report has been drawn up for all claims

| Place of search | Date of completion of the search | Examiner |
|---|---|---|
| Munich | 3 March 2015 | Morbee, Marleen |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

&: member of the same patent family, corresponding
   document

EPO FORM 1503 03.82 (P04C01)

**EP 2 991 354 A1**

## ANNEX TO THE EUROPEAN SEARCH REPORT
## ON EUROPEAN PATENT APPLICATION NO.

EP 14 30 6322

This annex lists the patent family members relating to the patent documents cited in the above-mentioned European search report.
The members are as contained in the European Patent Office EDP file on
The European Patent Office is in no way liable for these particulars which are merely given for the purpose of information.

03-03-2015

| Patent document cited in search report | | Publication date | Patent family member(s) | | Publication date |
|---|---|---|---|---|---|
| WO 2009003499 | A1 | 08-01-2009 | AT | 484155 T | 15-10-2010 |
| | | | CN | 102084653 A | 01-06-2011 |
| | | | EP | 2143279 A1 | 13-01-2010 |
| | | | JP | 5295233 B2 | 18-09-2013 |
| | | | JP | 2010531585 A | 24-09-2010 |
| | | | US | 2010260260 A1 | 14-10-2010 |
| | | | WO | 2009003499 A1 | 08-01-2009 |

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Do HDR displays support LDR content?. **AKYÜZ, A. O. ; FLEMING, R. ; RIECKE, B. E. ; REINHARD, E. ; BÜLTHOFF, H. H.** ACM SIGGRAPH 2007 papers. ACM Press, 2007
- **MASIA, B. ; AGUSTIN, S. ; FLEMING, R.** *Evaluation of Reverse Tone Mapping Through Varying Exposure Conditions,* 2009

- **REINHARD, E. ; STARK, M. ; SHIRLEY, P. ; FERWERDA, J.** Photographic tone reproduction for digital images. *ACM Transactions on Graphics,* July 2002, vol. 21